# EUROPÄISCHE PATENTSCHRIFT

(11) **EP 0 584 586 B1**
(45) Veröffentlichungstag und Bekanntmachung des Hinweises auf die Patenterteilung: **07.05.1997**
(21) Anmeldenummer: 93112347.5
(22) Anmeldetag: 02.08.1993
(51) Int. Cl.: C08F 10/06, C08F 4/646

(54) **Verfahren zur Herstellung eines Polypropylenwachses**
Process for preparing a polypropylene wax
Procédé de préparation d'une cire de polypropylène

(30) Priorität: 08.08.1992 DE 4226321
(43) Veröffentlichungstag der Anmeldung: 02.03.1994
(73) Patentinhaber: HOECHST AKTIENGESELLSCHAFT, 65926 Frankfurt am Main (DE)
(72) Erfinder: Hohner, Gerd, Dr., D-86368 Gersthofen (DE)

(56) Entgegenhaltungen:
- EP-A- 0 376 084
- EP-A- 0 385 765
- EP-A- 0 439 622
- DE-A- 3 148 229
- DIE MAKROMOLEKULARE CHEMIE Bd. 192, Nr. 3 , März 1991 , BASEL Seiten 721 - 734 XP217861 M. HÄRKÖNEN, J.V. SEPPÄLÄ 'External alkoxysilane donors in Ziegler-Natta catalysts. Effects on poly(propylene) microstructures'
- CHEMICAL ABSTRACTS, vol. 117, no. 2, 13. Juli 1992, Columbus, Ohio, US; abstract no. 8694j, T. ASANUMA; K. MORITA 'Polymerization catalysts for manufacture of stereoregular polypropylene' Seite 15 ;

## Beschreibung

Die Erfindung bezieht sich auf ein Verfahren zur Herstellung von Polpropylenwachsen hoher Kristallinität durch Homopolymerisation von Propylen oder Copolymerisation von Propylen mit geringen Anteilen anderer Olefine.

Ein Verfahren zur stereospezifischen Polymerisation von α-Olefinen auf Basis von Katalysatoren, enthaltend eine Titan-, eine Organoaluminium- und eine Organosiliciumverbindung, ist aus EP-A-0 376 084 bekannt. Die Polymerisation zu hochmolekularem Polypropylen erfolgt im Suspensionsverfahren bei 80°C.

Aus EP-A-0 385 765 ist ein Verfahren bekannt zur Herstellung von Polyolefinen mit breiter Molekulargewichtsverteilung, basierend auf Katalysatoren, die hergestellt sind aus einem festen Titankatalysator, einer Organoaluminiumverbindung und einem Elektronendonator. Propylen wird im Suspensionsverfahren bei 70°C polymerisiert.

Für die stereospezifische Polymerisation von α-Olefinen sind aus EP-A-0 439 622 Katalysatoren bekannt, die auf einer Verbindung aus Magnesium, Titan, Halogen und einem Elektronendonator sowie auf Trialkylaluminium und Dimethoxysilan beruhen. Propylen wird im Suspensionsverfahren bei 70°C polymerisiert.

Für die stereospezifische Polymerisation von Propylen sind aus Chemical Abstracts 117(2), no. 8694j, Katalysatoren bekannt, die auf Mg-halogeniden, Phthalsäurediestern, Titantetrachlorid, Trialkylaluminium und Alkoxysilanen beruhen.

Der Einfluß von Alkoxysilandonatoren bei der Polymerisation von Propylen mit Ziegler-Natta-Katalysatoren wurde in "Die makromolekulare Chemie", 192 (1991), 1297, untersucht. Das hochmolekulare Polypropylen wird im Suspensionsverfahren bei 60°C hergestellt.

Es ist bekannt, daß die Polymerisation von Propylen in Gegenwart eines durch Umsetzen einer Titan- mit einer Magnesiumverbindung gewonnenen Katalysators bei relativ hoher Temperatur zu wachsartigen Polymerisaten mit vergleichsweise hoher Schmelzviskosität führt (vgl. DE 23 29 641). Die Kristallinität dieser Wachse liegt im unteren bis mittleren Bereich und kann durch die Art der zur Aktivierung verwendeten aluminiumorganischen Verbindung in gewissen Grenzen beeinflußt werden, maximal erreicht man jedoch nur mittlere Kristallinitätsgrade.

Weiterhin sind hochkristalline Poly-1-Alken-, insbesondere Polypropylenwachse, durch Verwendung eines speziellen Katalysatorsystems zugänglich, bestehend aus dem Umsetzungsprodukt aus Titantetrahalogenid, Magnesiumalkoholat und einem Ether, Alkohol, Amin oder einer Carbonsäure oder einem Carbonsäurederivat (vgl. DE 31 48 229). Zusätzlich wird bei der Polymerisation eine weitere, stereoregulierende Komponente zugesetzt, ausgewählt aus der Gruppe der Carbonsäureester, Phosphorsäureamide, Ether oder Thioether. Die Polymerisation wird in Lösung in einem Temperaturbereich von 100 bis 110°C durchgeführt. Bei höherer Polymerisationstemperatur verringert sich die Kristallinität der Produkte. Nachteilig an diesem Verfahren ist, daß bei den erforderlichen niedrigen Polymerisationstemperaturen in der Regel der Trübungspunkt der gebildeten Wachse unterschritten wird, was zu deren Ausfällung und damit zur Bildung unerwünschter Reaktorbeläge führt.

Schließlich ist ein Verfahren bekannt zur Herstellung "ausschließlich isotaktischer" Polypropylenwachse durch Massepolymerisation mit Hilfe eines Titanhalogenids und einer aluminiumorganischen Verbindung bei einer Temperatur im Bereich von 180 bis 350°C und einem Druck von 500 bis 3000 bar (vgl. DE 34 31 842). Das Verfahren ist mit hohem Energieeinsatz verbunden und erfordert aufwendige druck- und temperaturstabile Apparaturen.

Bekannt ist außerdem die Herstellung hochisotaktischer homo- und copolymerer Polypropylenwachse nach einem Gasphasenverfahren, wobei Titan und Magnesium enthaltende Trägerkatalysatoren in Kombination mit aluminiumorganischen Aktivatoren und Elektronendonoren wie beispielsweise Alkoxysilan-Verbindungen eingesetzt werden(vgl. DE 40 30 379). Die nach diesem Verfahren zugänglichen Produkte sind jedoch vergleichsweise hochmolekular. Ihre Weiterverarbeitung nach der bei Wachsen üblichen Schmelztechnologie, die niedrige Viskositäten voraussetzt, ist damit nicht möglich oder zumindest schwierig.

Es ist weiterhin bekannt, daß Polypropylenwachse mit Hilfe von löslichen, Metallocenverbindungen enthaltenden Kontaktsystemen hergestellt werden können (vgl. DE 37 43 321, DE 39 04 468, DE 37 43 320). Die Synthese und Handhabung der Metallocen- und insbesondere der in großem Überschuß als Cokatalysatoren eingesetzten Aluminoxankomponenten ist aufwendig.

Es wurde nun gefunden, daß Polypropylenwachse mit hoher Kristallinität und guter Verarbeitbarkeit durch Lösungspolymerisation bei einer Temperatur oberhalb 110°C erhalten werden können, wenn man sich bei der Polymerisation eines speziellen Katalysatorsystems in Kombination mit einer Siliziumverbindung bedient.

Die Erfindung betrifft daher ein Verfahren zur Herstellung eines Polyolefinwachses mit einer IR-lsotaktizität > 70% und einer Schmelzviskosität, gemessen bei 170°C, von 50 bis 4000 mPa.s durch Homopolymerisation von Propylen oder Copolymerisation von Propylen mit 0,1 bis 5 Gew.-% Ethylen oder eines Olefins der Formel R-CH=CH₂, worin R einen Alkylrest mit 2 bis 38 C-Atomen bedeutet, in Lösung, bei einer Temperatur ≥ 110°C, bei einem Druck von 2 bis 100 bar, in Gegenwart eines Katalysatorsystems, bestehend aus einer titanhaltigen Komponente A, einer siliziumhaltigen Komponente B und einer aluminiumorganischen Komponente C, dadurch gekennzeichnet, daß die Komponente A hergestellt wurde durch Umsetzung einer Magnesiumverbindung der Formel I

Mg(OR¹)ₙX₂₋ₙ (I),

worin R¹ für gleiche oder verschiedene C₁-C₁₀-Alkylreste steht, X ein Halogenatom bedeutet und n 1 oder 2 ist, mit einer vierwertigen Titanverbindung der Formel II

Ti(OR²)ₘX₄₋ₘ (II),

worin R² für gleiche oder verschiedene C₁-C₆-Alkylreste steht, X ein Halogenatom bedeutet und m eine Zahl von 0 bis 4 ist, als Komponente B eine Siliziumverbindung der Formel III

R³ ₚSi(OR⁴)₄₋ₚ (III)

worin p 1, 2 oder 3 bedeutet, **R**³ für gleiche oder verschiedene C₁-C₁₆-Alkylreste, gegebenenfalls alkylsubstituierte C₅-C₈-Cycloalkylreste, C₆-C₁₈-Arylreste oder C₇-C₁₈-Aralkylreste steht und **R**^{**4**} gleiche oder verschiedene C₁-C₁₆-Alkylreste bedeutet, eingesetzt wird und als Komponente C eine Aluminiumverbindung der Formel IV

R⁵ _{q}AlCl_{3-q} (IV)

worin q 1, 2 oder 3 ist und R⁵ für gleiche oder verschiedene C₁-C₃₀-Alkylreste steht, eingesetzt wird.

Die Herstellung des Katalysators erfolgt in der Weise, daß man zunächst die Katalysatorkomponente A bereitet, indem man eine Magnesiumverbindung, bevorzugt ein Magnesiumalkoholat, mit einer vierwertigen Titanverbindung, bevorzugt einem Titantetrahalogenid, in einem inerten Lösemittel umsetzt. Als Magnesiumalkoholat wird eine Verbindung der Formel I

Mg(OR¹)ₙX₂₋ₙ (I),

worin R¹ für gleiche oder verschiedene, vorzugsweise geradkettige C₁-C₁₀-, vorzugsweise C₁-C₆-Alkylreste steht, X ein Halogenatom bedeutet und n 1 oder 2 ist, eingesetzt. Beispielsweise seien Mg(OCH₃)₂, Mg(OC₂H₅)₂, Mg(OC₃H₇)₂, Mg(OC₄H₉)₂ genannt. Es können jedoch auch Magnesiumalkoholate der Formel MgX(OR¹) verwendet werden, in der X Halogen ist und R¹ die obengenannte Bedeutung hat.

Die Magnesiumverbindung wird mit einer vierwertigen Titanverbindung der Formel II

Ti(OR²)ₘX₄₋ₘ (II),

worin R² für gleiche oder verschiedene C₁-C₆-Alkylreste steht, X ein Halogenatom bedeutet und m eine Zahl von 0 bis 4 ist, bei einer Temperatur von 0 bis 200, bevorzugt 20 bis 120°C zur Reaktion gebracht. Als Reaktionsmedium dient ein inertes Verdünnungs- und Suspensionsmittel, beispielsweise ein Kohlenwasserstoff. Geeignet sind aliphatische und cycloaliphatische Kohlenwasserstoffe wie beispielsweise Hexan, Heptan oder Cyclohexan sowie aromatische Kohlenwasserstoffe wie Benzol, Toluol usw. Vorteilhaft legt man die Magnesiumkomponente als Suspension vor und fügt unter Rühren die Titanverbindung hinzu. Magnesium- und Titanverbindung werden zweckmäßigerweise und bevorzugt im molaren Verhältnis 1 : 0,2 bis 1 : 5 eingesetzt, jedoch sind auch Molverhältnisse außerhalb dieses Bereiches möglich. Die Reaktionszeiten liegen im allgemeinen zwischen 1 und 10 Stunden.

Die so erhaltene Katalysatorkomponente A fällt als Feststoff an. Sie wird durch wiederholtes Waschen mit einem inerten Kohlenwasserstoff, bevorzugt mit dem bei ihrer Herstellung verwendeten Medium, von löslichen Anteilen befreit. Der gewaschene Katalysator kann gegebenenfalls mit einem Elektronendonor umgesetzt werden. Geeignete Elektronendonoren sind Alkohole wie Methanol, Ethanol, Propanol, Ether wie Diethyl-, Di-n-butyl- oder Di-i-amylether, Amine wie Triethylamin, aliphatische oder aromatische Carbonsäuren sowie deren Derivate, beispielsweise Ester, Anhydride, Halogenide oder Amide wie beispielsweise Ethylacetat, Ethylbenzoat, Benzoesäureanhydrid und Benzamid.

Als Komponente B wird eine Siliziumverbindung der Formel III verwendet:

R³ ₚSi(OR⁴)₄₋ₚ (III),

worin p 1, 2 oder 3 bedeutet, **R**³ für gleiche oder verschiedene C₁-C₁₆-Alkylreste, gegebenenfalls alkylsubstituierte C₅-C₈-Cycloalkylreste, C₆-C₁₈-Arylreste, beispielsweise Phenylreste, oder C₇-C₁₈-Aralkylreste, beispielsweise 4-Methylphenylreste steht und **R**⁴ gleiche oder verschiedene C₁-C₁₆-Alkylreste, beispielsweise Methyl, Ethyl oder n- oder i-Propyl bedeutet, umgesetzt werden. Als Beispiele für Komponente B seien genannt Methyltrimethoxisilan, Ethyltrimethoxisilan, Propyltrimethoxysilan, Dimethyldimethoxisilan, Dimethyldiethoxisilan, Isobutylmethyldimethoxisilan, Trimethylmethoxisilan, Cyclopentylmethyldimethoxisilan, Cyclohexylmethyldimethoxisilan, Phenyltrimethoxisilan und Diphenyldimethoxisilan.

Als aluminiumorganische Komponente C dienen Verbindungen der Formel IV

R⁵ _{q}AlCl_{3-q} (IV),

worin q 1, 2 oder 3 ist und R⁵ für gleiche oder verschiedene C₁-C₃₀-, vorzugsweise C₂-C₁₂-Alkylreste steht. Das atomare Verhältnis von Cl:Al liegt dementsprechend zwischen 2 : 1 und 0 : 1. Vorzugsweise stellt man ein Verhältnis zwischen 1 : 1 und 0,25 : 1 ein, was durch Mischen von aluminiumorganischen Verbindungen mit unterschiedlichem Chlorgehalt, beispielsweise Triethylaluminium und Diethylaluminiumchlorid, erfolgen kann.

Mit diesem Katalysatorsystem werden Propylen oder Propylen mit 0,1 bis 5 Gew.-% Ethylen oder einem Olefin der Formel R-CH=CH₂, worin R einen Alkylrest mit 2 bis 38 C-Atomen bedeutet, zum Beispiel 1-Buten oder 1-Hexen, polymerisiert.

Zur Durchführung der Polymerisation geht man vorteilhaft in der Weise vor, daß man zunächst das Katalysatorsystem bereitet, indem man die Komponente C mit der Komponente B durch Mischen in Gegenwart eines inerten Kohlenwasserstoffs zur Reaktion bringt und hierauf die Komponente A zu diesem Gemisch hinzufügt. Die Mengen sind hierbei so zu wählen, daß das Molverhältnis von Komponente C (bezogen auf Aluminium) zu Komponente B 200 : 1 bis 1 : 1, vorzugsweise 50 : 1 bis 10 : 1 beträgt und das Molverhältnis von Komponente C (bezogen auf Aluminium) zu Komponente A (bezogen auf Titan) 1 : 1 bis 30 : 1, bevorzugt 2 : 1 bis 20 : 1 beträgt.

Die Polymerisation wird kontinuierlich oder diskontinuierlich in Lösung bei einer Temperatur oberhalb 110°C, bevorzugt zwischen 115 und 150°C, besonders bevorzugt zwischen 120 und 140°C bei einem Druck von 2 bis 100 bar, vorzugsweise 5 bis 20 bar durchgeführt. Es ist auch möglich, in bei der Polymerisationstemperatur flüssigen, bei Raumtemperatur jedoch festen inerten Kohlenwasserstoffen zu polymerisieren.

Die Regelung der Molmasse erfolgt in bekannter Weise durch Zusatz von Wasserstoff.
Nach Beendigung der Polymerisation erfolgt die Abtrennung des Lösemittels vorzugsweise - gegebenfalls nach vorheriger Zersetzung des Katalysators mit geeigneten Zersetzungsmitteln, beispielsweise Wasser, und anschließender Filtration - durch Destillation.

Die nach dem erfindungsgemäßen Verfahren hergestellten Polyolefinwachse sind zäh-harte, farblose, nicht klebrige, thermostabile, gut mahlbare Produkte mit einem IR-spektroskopisch bestimmten Isotaxiegrad größer 70% und einer Schmelzviskosität von 50 bis 4000 mPa.s, gemessen bei 170°C. Die Wachse eignen sich beispielsweise als Basismassen für die Pigmentpräparation, zur Scheuerschutzausrüstung von Druckfarben, zur Lackmattierung, als Hilfsmittel bei der Verarbeitung von Kunststoffen, etwa als Gleit- und Trennmittel, als Rezepturkomponente in Fototonern sowie als Schmelzpunktserhöher.

Die folgenden Beispiele dienen der weiteren Erläuterung der Erfindung.

Die Schmelzviskositäten wurden in einem Rotationsviskosimeter gemessen. Die Isotaxiebestimmung erfolgte IR-spektroskopisch nach J.P.Luongo, J. Appl. Pol. Chem. 3 (9), 302 (1960), die Bestimmung der Schmelzwärme DSC-spektroskopisch.

### Beispiel 1

114,4 g (1,0 mol) Magnesiumethylat wurden in 1000 cm³ einer Dieselölfraktion (Siedebereich 140 bis 160°C) suspendiert. Man tropfte unter Rühren bei 85°C innerhalb von 4 h 284,8 g (1,5 mol) Titantetrachlorid zu dem Ansatz. Anschließend wurde die Suspension noch 30 min bei 85°C gerührt. Der Niederschlag wurde durch wiederholtes Verrühren mit Dieselöl gewaschen, bis das über dem Feststoff stehende Dieselöl frei von Titan war.

Das für die Polymerisation eingesetzte Katalysatorsystem wurde durch Vermischen von 150 mmol Triethylaluminium, 75 mmol Diethylaluminiumchlorid (Katalysatorkomponente C) und 7,5 mmol Cyclohexylmethyldimethoxysilan (Komponente B) in 1,5 dm³ Dieselölfraktion und anschließendes Einrühren von 30 mmol (bezogen auf Ti) der obigen Katalysatorkomponente A in diese Mischung hergestellt. Das Molverhältnis der genannten Komponenten betrug 5 : 2,5 : 0,25 : 1.

In einem 40 dm³ -Kessel mit Impeller-Rührer wurden 15 dm³ einer Dieselölfraktion (Siedebereich 140 bis 160°C) vorgelegt. Nach Aufheizen des Kesselinhalts auf 130°C wurde zunächst Wasserstoffgas bis zu einem Innendruck von 0,1 bar, dann Propylen bis zu einem Innendruck von 5 bar zudosiert. Bei 130°C wurden 0,5 dm³ des vorstehend beschriebenen Katalysators zugepumpt. Durch kontinuierliches Nachdosieren von stündlich 3,2 kg Propylen und 0,5 dm³ Wasserstoff und intermittierender Zufuhr von Katalysator wurde der Druck bei 5 bar gehalten. Die Polymerisationstemperatur betrug 130°C.

Nach 75 min waren insgesamt 1050 cm³ der Katalysatorsuspension entsprechend ca. 21 mgat Ti verbraucht. Die Reaktion wurde durch Zufügen von 15 cm³ Wasser unterbrochen, die Polymerisatlösung filtriert und das Lösemittel im Vakuum abdestilliert. Es wurden 3,55 kg Polypropylenwachs gewonnen.

Schmelzviskosität bei 170°C 1330 mPa.s; Schmelzwärme 83 J/g; IR-Isotaxie 72%.

### Vergleichsbeispiel A

Die Katalysatorkomponente A wurde entsprechend Beispiel 1 hergestellt. Das zur Polymerisation eingesetzte Katalysatorsystem bestand aus 90 mmol Triethylaluminium, 60 mmol Diethylaluminiumchlorid und 30 mg-at der Komponente A. Eine Siliziumverbindung wurde nicht verwendet.

Die Polymerisation von Propylen unter den in Beispiel 1 beschriebenen Bedingungen führte zu einem Wachsprodukt, das eine niedrigere Kristallinität aufwies als das nach Beispiel 1 erhaltene.

Schmelzviskosität bei 170°C: 1320 mPa.s; Schmelzwärme 63 J/g. IR-Isotaxie 63%.

### Vergleichsbeispiel B

Es wurde ein Polymerisationskatalysator entsprechend DE-A 31 48 229, Beispiel 1 hergestellt. Hierzu wurden 114,4 g (1,0 mol) Magnesiumethylat in 1000 cm³ einer Dieselölfraktion (Siedebereich 140 - 160°C) suspendiert. Man tropfte unter Rühren bei 85°C innerhalb von 4 h 380 g (2,0 mol) Titantetrachlorid zu. Danach wurde der Ansatz noch 30 min bei 85°C gerührt. Der Niederschlag wurde durch Dekantieren und wiederholtes Verrühren mit Dieselöl gewaschen, bis das über dem Feststoff stehende Dieselöl frei von Titan war.

Anschließend wurde die Suspension mit 31,7 g (0,20 mol) Di-isoamylether als Elektronendonor versetzt und 1 h bei 100°C gerührt. Der Feststoff wurde durch Waschen mit Dieselöl von löslichen Titanverbindungen befreit.

Unter Verwendung dieses Katalysators wurde entsprechend Beispiel 1 DE-A 31 48 229 Propylen polymerisiert, wobei jedoch eine Polymerisationstemperatur von 130°C anstelle der angegebenen 100°C gewählt wurde. Das resultierende Polypropylenwachs wies folgende Kennzahlen auf:
Schmelzviskosität bei 170°C 810 mPa.s; Schmelzwärme 79 J/g;
IR-Isotaxie 71%.
Wie ersichtlich, ist der Isotaxiewert des Wachses deutlich niedriger als der eines auf gleiche Weise, jedoch bei 100°C hergestellten Produktes (85%). Wird die Polymerisation gemäß DE 31 48 229 bei 100°C durchgeführt, so ist zwar der Isotaxiewert höher, jedoch zeigt die Innenwand des Polymerisationskessels Beläge von ausgefallenem Produkt, die die Abführung der Reaktionswärme behindern.

### Beispiel 2

Die Polymerisation wurde entsprechend Beispiel 1 durchgeführt. Der Katalysator wurde durch Vermischen von 210 mmol Triethylaluminium, 105 mmol Diethylaluminiumchlorid, 22,5 mmol Cyclohexylmethyldimethoxysilan und 30 mg-at der Katalysatorkomponente A aus Beispiel 1 entsprechend einem Molverhältnis von 7 : 3,5 : 0,75 : 1 hergestellt. Man erhielt ein Polypropylenwachs mit folgenden Kenndaten:
Schmelzviskosität bei 170°C 1990 mPa.s; Schmelzwärme 106 J/g;
IR-Isotaxie 80%.

### Beispiel 3

114,4 g Magnesiumethylat wurden in 1000 cm³ einer Dieselölfraktion (Siedebereich 140 bis 160°C) suspendiert. Man tropfte unter Rühren bei 85°C innerhalb von 4 h 380 g (2,0 mol) Titantetrachlorid zu den Ansatz. Anschließend wurde die Suspension noch 30 min bei 85°C gerührt. Der Niederschlag wurde durch wiederholtes Verrühren mit Dieselöl gewaschen, bis das über dem Feststoff stehende Dieselöl frei von Titan war.

Anschließend wurde die Suspension mit 31,7 g Diisoamylether (200 mmol) versetzt und 1 h bei 100°C gerührt. Der Feststoff wurde wiederum durch Waschen mit Dieselöl von löslichen Titanverbindungen befreit. Er enthielt noch 3,5% des ursprünglich als Titantetrachlorid eingesetzten Titans.

Die Polymerisation wurde entsprechend Beispiel 1 durchgeführt. Das Katalysatorsystem wurde durch Vermischen von 210 mmol Triethylaluminium, 105 mmol Diethylaluminiumchlorid, 22,5 mmol Cyclohexylmethyldimethoxysilan und 30 mg-at der Katalysatorkomponente A entsprechend einem Molverhältnis von 7 : 3,5 : 0,75 : 1 hergestellt. Man erhielt ein Polypropylenwachs mit folgenden Kenndaten:
Schmelzviskosität bei 170°C 1200 mPa.s; Schmelzwärme 110 J/g;
IR-Isotaxie 84%.

### Beispiel 4

Das für die Polymerisation eingesetzte Katalysatorsystem wurde analog Beispiel 1 hergestellt, wobei anstelle von Cyclohexylmethyldimethoxysilan Diphenyldimethoxysilan verwendet wurde. Die wie in Beispiel 1 beschrieben durchgeführte Polymerisation von Propylen lieferte ein Wachs mit folgenden Kennzahlen:
Schmelzviskosität bei 170°C 1600 mPa.s; Schmelzwärme 82 J/g; IR-Isotaxie 73 %.

## Patentansprüche

1. Verfahren zur Herstellung eines Polypropylenwachses mit einer IR-Isotaktizität >70% und einer Schmelzviskosität, gemessen bei 170°C, von 50 bis 4000 mPa.s durch Homopolymerisation von Propylen oder Copolymerisation von Propylen mit 0,1 bis 5 Gew.-% Ethylen oder eines Olefins der Formel R-CH=CH₂, worin R einen Alkylrest mit 2 bis 38 C-Atomen bedeutet, in Lösung, bei einer Temperatur ≥ 110°C, bei einem Druck von 2 bis 100 bar, in Gegenwart eines Katalysatorsystems, bestehend aus einer titanhaltigen Komponente A, einer siliziumhaltigen Komponente B und einer aluminiumorganischen Komponente C, dadurch gekennzeichnet, daß die Komponente A hergestellt wurde durch Umsetzung einer Magnesiumverbindung der Formel I
Mg(OR¹)ₙX₂₋ₙ (I),
worin R¹ für gleiche oder verschiedene C₁-C₁₀-Alkylreste steht, X ein Halogenatom bedeutet und n 1 oder 2 ist, mit einer vierwertigen Titanverbindung der Formel II
Ti(OR²)ₘX₄₋ₘ (II),
worin R² für gleiche oder verschiedene C₁-C₆-Alkylreste steht, X ein Halogenatom bedeutet und m eine Zahl von 0 bis 4 ist,
als Komponente B eine Siliziumverbindung der Formel III
R³ ₚSi(OR⁴)₄₋ₚ (III)
worin p 1, 2 oder 3 bedeutet, **R**³ für gleiche oder verschiedene C₁-C₁₆-Alkylreste, gegebenenfalls alkylsubstituierte C₅-C₈-Cycloalkylreste, C₆-C₁₈-Arylreste oder C₇-C₁₈-Aralkylreste steht, und **R**⁴ gleiche oder verschiedene C₁-C₁₆-Alkylreste bedeutet, eingesetzt wird und als Komponente C eine Aluminiumverbindung der Formel IV
R⁵ _{q}AlCl_{3-q} (IV)
worin q 1, 2 oder 3 ist und R⁵ für gleiche oder verschiedene C₁-C₃₀-Alkylreste steht, eingesetzt wird.

2. Verfahren nach Anspruch 1, dadurch gekennzeichnet, daß die Umsetzung der Magnesiumverbindung der Formel I mit der Titanverbindung der Formel II in Gegenwart eines Elektronendonors aus der Gruppe der Ether, Alkohole und Carbonsäuren und deren Derivaten durchgeführt wurde.

## Claims

1. A process for preparing a polypropylene wax having an IR isotacticity of > 70 % and a melt viscosity, measured at 170°C, of 50 to 4000 mPa.s by homopolymerization of propylene or copolymerization of propylene with 0.1 to 5 % by weight of ethylene or of an olefin of the formula R-CH=CH₂, in which R is an alkyl radical having 2 to 38 carbon atoms, in solution, at a temperature of ≥ 110°C, at a pressure of 2 to 100 bar, in the presence of a catalyst system composed of a titanium-containing component A, a silicon-containing component B and an aluminum-organic component C, wherein component A has been prepared by reacting a magnesium compound of the formula I
Mg(OR¹)ₙX₂₋ₙ (I),
in which R¹ is identical or different C₁-C₁₀-alkyl radicals, X is a halogen atom and n is 1 or 2, with a tetravalent titanium compound of the formula II
Ti(OR²)ₘX₄₋ₘ (II),
in which R² is identical or different C₁-C₆-alkyl radicals, X is a halogen atom and m is a number from 0 to 4,
a silicon compound of the formula III
R³ ₚSi(OR⁴)₄₋ₚ (III),
in which p is 1, 2 or 3, R³ is identical or different C₁-C₁₆-alkyl radicals or unsubstituted or alkyl-substituted C₅-C₈-cycloalkyl radicals, C₆-C₁₈-aryl radicals or C₇-C₁₈-aralkyl radicals, and R⁴ is identical or different C₁-C₁₆-alkyl radicals, is used as component B and an aluminum compound of the formula IV
R⁵ _{q}AlCl_{3-q} (IV)
in which q is 1, 2 or 3 and R⁵ is identical or different C₁-C₃₀-alkyl radicals, is used as component C.

2. The process as claimed in claim 1, wherein the reaction of the magnesium compound of the formula I with the titanium compound of the formula II has been carried out in the presence of an electron donor from the group comprising ethers, alcohols and carboxylic acids and derivatives thereof.

## Revendications

1. Procédé pour la préparation d'une cire de polypropylène ayant une isotacticité en IR > 70 % et une viscosité à chaud mesurée à 170 °C de 50 à 4000 mPa·s par homopolymérisation du propylène ou par copolymérisation du propylène ayant une teneur de 0,1 à 5 % en poids en éthylène ou une oléfine de formule R-CH=CH₂, dans laquelle R représente un radical alkyle avec 2 à 38 atomes de carbone, en solution, à une température ≥ 110 °C, à une pression de 2 à 100 bars, en présence d'un système catalytique composé d'un composant A contenant du titane, d'un composant B contenant du silicium et d'un composant C organoaluminié caractérisé en ce que l'on prépare le composant A par réaction d'un composé de magnésium de formule I
Mg(OR¹)ₙX₂₋ₙ (I),
dans laquelle R¹ représente des radicaux alkyle en C₁-C₁₀ identiques ou différents, X représente un atome d'halogène et n vaut 1 ou 2, avec un composé de titane tétravalent de formule II
Ti(OR²)ₘX₄₋ₘ (II),
dans laquelle R² représente des radicaux alkyle en C₁-C₆ identiques ou différents, X représente un atome d'halogène et m va de 0 à 4, comme composant B un composé de silicium de formule III
R³ ₚSi(OR⁴)₄₋ₚ (III),
dans laquelle p vaut 1, 2 ou 3, R³ représente des radicaux alkyle en C₁-C₁₆ identiques ou différents, des radicaux cycloalkyle en C₅-C₈ éventuellement substitués par alkyle, des radicaux aryle en C₆-C₁₈ ou des radicaux aralkyle en C₇-C₁₈ et R⁴ représente des radicaux alkyle en C₁-C₁₆ identiques ou différents, et en tant que composant C un composé d'aluminium de formule IV
R⁵ _{q}AlCl_{3-q} (IV),
dans laquelle q vaut 1, 2 ou 3 et R⁵ représente des radicaux alkyle en C₁-C₃₀ identiques ou différents.

2. Procédé selon la revendication 1, caractérisé en ce que l'on met en oeuvre la réaction du composé de magnésium de formule I avec le composé de titane de formule II en présence d'un donneur d'électrons pris dans le groupe comportant les éthers, les alcools et les acides carboxyliques et leurs dérivés.
